(19)

Europäisches
Patentamt
European
Patent Office
Office européen
des brevets

(11) **EP 4 564 722 A1**

(12) **EUROPEAN PATENT APPLICATION**
published in accordance with Art. 153(4) EPC

(43) Date of publication:
**04.06.2025 Bulletin 2025/23**

(21) Application number: **23846877.1**

(22) Date of filing: **12.07.2023**

(51) International Patent Classification (IPC):
*H04L 5/00* (2006.01)    *H04W 74/00* (2009.01)
*H04W 72/23* (2023.01)    *H04L 27/26* (2006.01)
*H04W 74/08* (2024.01)    *H04W 76/27* (2018.01)
*H04L 1/08* (2006.01)

(52) Cooperative Patent Classification (CPC):
**H04L 1/08; H04L 5/00; H04L 27/26; H04W 72/23;
H04W 74/00; H04W 74/08; H04W 76/27**

(86) International application number:
**PCT/KR2023/009972**

(87) International publication number:
**WO 2024/025218 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.07.2022 KR 20220091721
26.09.2022 KR 20220121920
04.11.2022 KR 20220146487
19.12.2022 KR 20220178509**

(71) Applicant: **LG Electronics Inc.
Yeongdeungpo-gu
Seoul 07336 (KR)**

(72) Inventors:
• **SHIN, Seokmin**
  Seoul 06772 (KR)
• **KO, Hyunsoo**
  Seoul 06772 (KR)
• **YANG, Suckchel**
  Seoul 06772 (KR)
• **KIM, Seonwook**
  Seoul 06772 (KR)
• **PARK, Haewook**
  Seoul 06772 (KR)

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR UPLINK TRANSMISSION AND RECEPTION IN WIRELESS
COMMUNICATION SYSTEM**

(57) Disclosed are a method and a device for uplink transmission and reception in a wireless communication system. A method according to one embodiment of the present disclosure may comprise the steps of: receiving PUSCH-related configuration information about a specific BWP from a base station, wherein the configuration information includes first information about whether dynamic waveform switching for the PUSCH is supported; receiving, from the base station, DCI scheduling the PUSCH; and transmitting the PUSCH to the base station.

FIG.10

Receive configuration information
related to uplink transmission  — S1001

Receive control information  — S1002

Transmit uplink signal/channel  — S1003

**Description**

[Technical Field]

The present disclosure relates to a wireless communication system, and in more detail, relates to a method and an apparatus for transmitting and receiving an uplink channel/signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for dynamically switching/changing a waveform for uplink transmission.

In addition, a technical object of the present disclosure is to provide a method and an apparatus for configuring whether to support an operation for dynamically switching/changing a waveform for uplink transmission.

In addition, a technical object of the present disclosure is to provide a method and an apparatus for dynamically transmitting/receiving an uplink transmission as a waveform.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station, configuration information related to a physical uplink shared channel (PUSCH) for a specific bandwidth part (BWP), wherein the configuration information includes first information on whether dynamic waveform switching is supported for the PUSCH; receiving, from the base station, downlink control information (DCI) for scheduling the PUSCH; and transmitting the PUSCH to the base station. Based on the DCI including second information for indicating whether transform precoding for the PUSCH is enabled or disabled as the dynamic waveform switching is supported, whether to apply the transform precoding to the PUSCH may be determined based on the second information.

A method performed by a base station in a wireless communication system according to an additional aspect of the present disclosure may include: transmitting, to a user equipment (UE), configuration information related to a physical uplink shared channel (PUSCH) for a specific bandwidth part (BWP), wherein the configuration information includes first information on whether dynamic waveform switching is supported for the PUSCH; transmitting, to the UE, downlink control information (DCI) for scheduling the PUSCH; and receiving the PUSCH from the UE. Based on the DCI including second information for indicating whether transform precoding for the PUSCH is enabled or disabled as the dynamic waveform switching is supported, whether to apply the transform precoding to the PUSCH may be determined based on the second information.

[Technical Effects]

According to an embodiment of the present disclosure, the performance of uplink transmission and reception can be improved by dynamically switching/changing the waveform for uplink transmission.

In addition, according to an embodiment of the present disclosure, since it is possible to determine whether dynamic waveform switching is supported before dynamic waveform indication by control information, ambiguity regarding a size of control information between a UE and a base station can be prevented.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a random access process in a wireless communication system to which the present disclosure can be applied.
FIG. 8 illustrates a two-step random access process in a wireless communication system to which the present disclosure can be applied.
FIG. 9 illustrates a signaling method for an uplink transmission and reception method according to an embodiment of the present disclosure.
FIG. 10 is a diagram illustrating an operation of a UE for an uplink transmission and reception method according to an embodiment of the present disclosure.
FIG. 11 is a diagram illustrating an operation of a base station for an uplink transmission and reception method according to an embodiment of the present disclosure.
FIG. 12 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access

- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

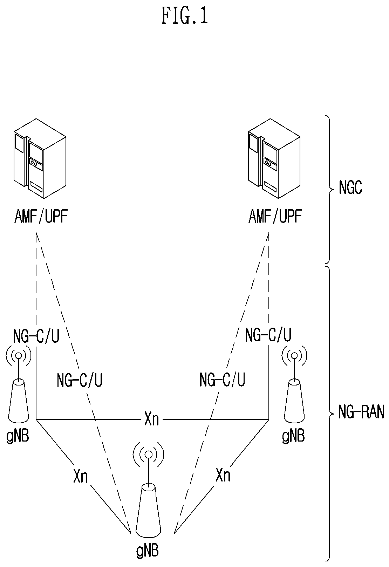

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

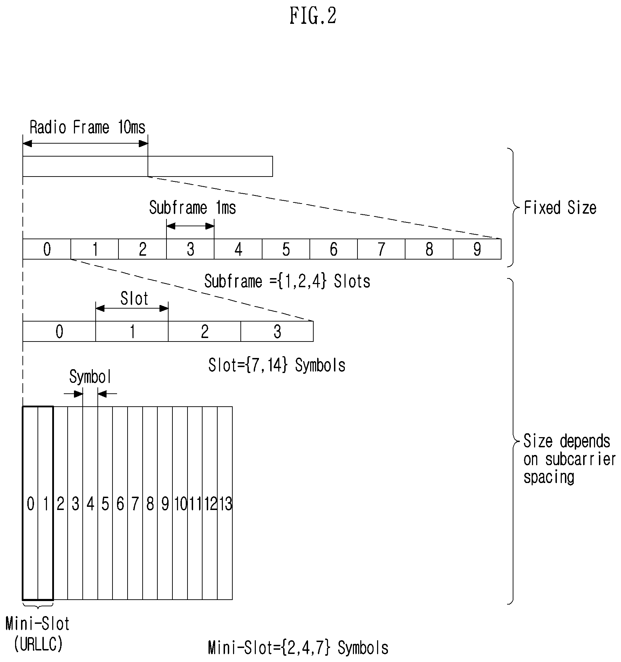

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 103$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu} - 1\}$ in a subframe and are numbered in an increasing order of $n_{s,f}^{\mu} \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

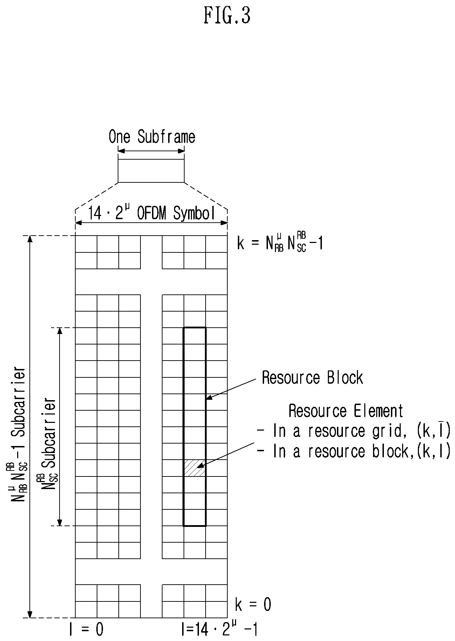

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, 1=0,..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

-    offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
-    absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

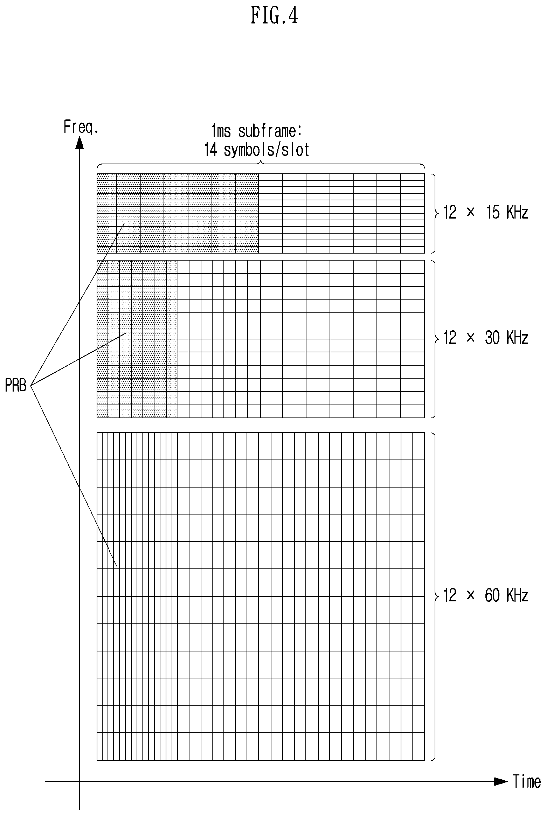

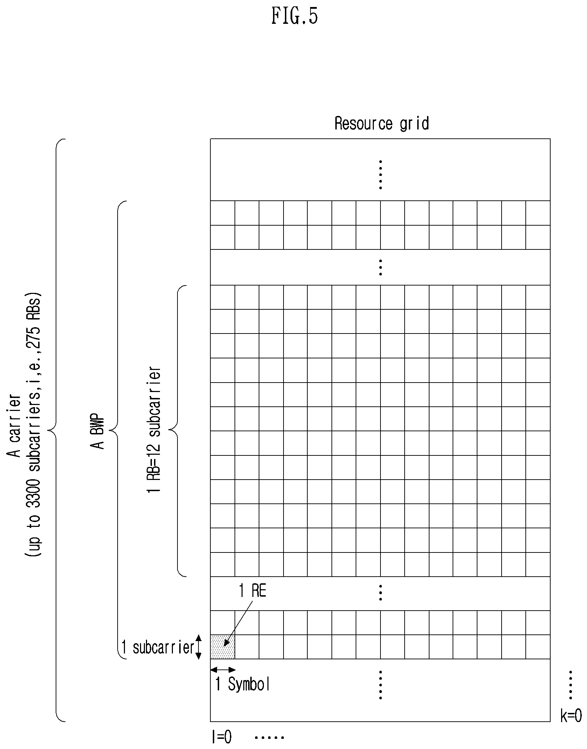

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

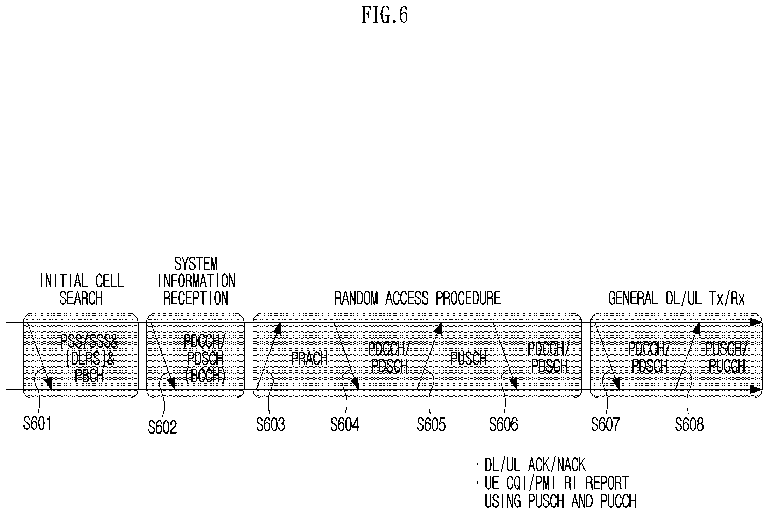

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Random access operation and related operation

When there is no PUSCH transmission resource (i.e., Uplink Grant) allocated by the base station, a terminal may perform a random access operation. A random access of the NR system may be initiated 1) when a terminal requests or resumes an RRC connection, 2) when a terminal performs handover or secondary cell group (SCG) addition (i.e., SCG addition) to an adjacent cell, 3) when transmitting a scheduling request to a base station, 4) when a base station indicates a random access of a terminal with a PDCCH order, 5) when a beam failure or RRC connection failure is detected.

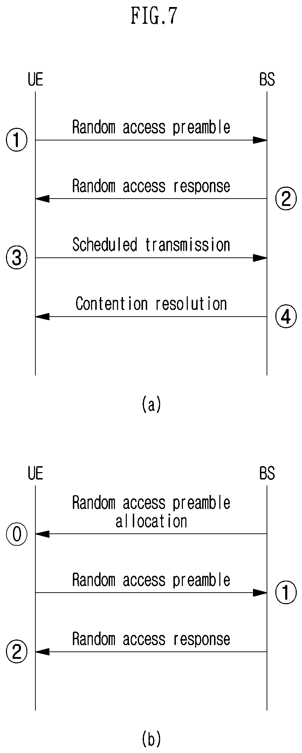

FIG. 7 illustrates a random access procedure in a wireless communication system to which the present disclosure can be applied. FIG. 7(a) illustrates a contention-based random access procedure, and FIG. 7(b) illustrates a dedicated random access procedure.

Referring to FIG. 7(a), a contention-based random access process includes the following four steps. Hereinafter, messages transmitted in steps 1 to 4 may be referred to as messages (Msg) 1 to 4, respectively.

- Step 1: A terminal transmits a random access channel (RACH) preamble through a physical random access channel (PRACH).
- Step 2: A terminal receives a random access response (RAR) through a downlink shared channel (DL-SCH) from a base station.
- Step 3: A terminal transmits a Layer 2 / Layer 3 message to a base station through an uplink shared channel (UL-SCH).
- Step 4: A terminal receives a contention resolution message from a base station through a DL-SCH.

A terminal may receive information on a random access from a base station through system information.

If a random access is required, a terminal transmits a RACH preamble to a base station as in step 1. A base station may distinguish each random access preamble through a time/frequency resource (i.e., RACH Occasion (RO)) and a random access preamble index (PI) in which a random access preamble is transmitted.

When a base station receives a random access preamble from a terminal, the base station transmits a random access response (RAR) message to the terminal as in step 2. For reception of a random access response message, within a preconfigured time window (e.g., ra-ResponseWindow), a terminal monitors a CRC-masked L1/L2 control channel (PDCCH) with a RA-RNTI (Random Access-RNTI) including scheduling information for the random access response message. A PDCCH masked with a RA-RNTI may be transmitted only through a common search space. When receiving a scheduling signal masked by a RA-RNTI, a terminal may receive a random access response message from a PDSCH indicated by the scheduling information. Thereafter, a terminal checks whether there is random access response information indicated to itself in the random access response message. Whether or not random access response information indicated to itself exists may be checked by whether a random access preamble ID (RAPID) for a preamble transmitted by the terminal exists. An index of a preamble transmitted by a terminal and a RAPID may be the same. Random access response information includes a corresponding random access preamble index, timing offset information for UL synchronization (e.g., Timing Advance Command (TAC)), UL scheduling information for message 3 transmission (e.g., UL grant) and terminal temporary identification information (e.g., TC-RNTI (Temporary-C-RNTI)).

A terminal receiving random access response information transmits UL-SCH (Shared Channel) data (message 3) through a PUSCH according to L scheduling information and a timing offset value, as in step 3. A time and frequency resource to which a PUSCH carrying message 3 is mapped/transmitted is defined as PO (PUSCH Occasion). Message 3 may include an ID of a terminal (or a global ID of a terminal). Alternatively, message 3 may include RRC connection request related information (e.g., RRCSetupRequest message) for initial access. In addition, message 3 may include a buffer status report (BSR) on an amount of data available for transmission by a terminal.

After receiving UL-SCH data, as in step 4, a base station transmits a contention resolution message (message 4) to a terminal. When a terminal receives a contention resolution message and a contention is resolved successfully, a TC-RNTI is changed to a C-RNTI. Message 4 may include an ID of a terminal and/or RRC connection related information (e.g., an RRCSetup message). If information transmitted through message 3 and information received through message 4 do not match, or if message 4 is not received for a certain duration of time, a terminal may retransmit message 3 as a contention resolution has failed.

Referring to FIG. 7(b), a dedicated random access process includes the following three steps. Hereinafter, messages transmitted in steps 0 to 2 may be referred to as messages (Msg) 0 to 2, respectively. A dedicated random access procedure may be triggered using a PDCCH (hereinafter referred to as a PDCCH order) for which a base station instructs to transmit a RACH preamble.

- Step 0: A base station allocates a RACH preamble through dedicated signaling to a terminal.
- Step 1: A terminal transmits a RACH preamble through a PRACH.
- Step 2: A terminal receives a random access response (RAR) through a DL-SCH from a base station.

The operations of steps 1 and 2 of a dedicated random access procedure may be the same as steps 1 and 2 of a contention-based random access procedure.

In NR, DCI format 1_0 is used to initiate a non-contention-based random access procedure with a PDCCH order. DCI format 1_0 is used to schedule a PDSCH in one DL cell. Meanwhile, when a CRC (Cyclic Redundancy Check) of DCI format 1_0 is scrambled with a C-RNTI and all bit values of the "Frequency domain resource assignment" field are 1, DCI format 1_0 is used as a PDCCH order indicating a random access procedure. do. In this case, fields of DCI format 1_0 are configured as follows.

- RA preamble index: 6 bits
- UL / SUL (Supplementary UL) indicator: 1 bit. When bit values of a RA preamble index are not all 0 and SUL is configured in a cell for a terminal, it indicates a UL carrier on which a PRACH is transmitted in a cell. Otherwise, it is reserved.
- SSB (Synchronization Signal / Physical Broadcast Channel) index: 6 bits. When all bit values of a RA preamble index are not 0, it indicates an SSB used to determine a RACH opportunity for PRACH transmission. Otherwise, it is reserved.
- PRACH mask index: 4 bits. When all bit values of a RA preamble index are not 0, it indicates a RACH opportunity associated with an SSB indicated by an SSB index. Otherwise, it is reserved.
- Reserved: 10 bits

When DCI format 1_0 does not correspond to a PDCCH order, DCI format 1_0 includes fields used to schedule a PDSCH (e.g., TDRA (Time domain resource assignment), MCS (Modulation and Coding Scheme), HARQ process number, PDSCH-to-HARQ_feedback timing indicator, etc.).

In the NR system, lower latency than the existing system may be required. In addition, if a random access process occurs in an U-band, the random access process is terminated and contention is resolved only when a terminal and a base station sequentially succeed in an LBT in both a 4-step random access process. If an LBT fails in even one step of a 4-step random access process, resource efficiency decreases and latency increases. Specifically, if an LBT fails in a scheduling/transmission process associated with message 2 or message 3, a decrease in resource efficiency and an increase in latency may occur significantly. Even a random access process in an L-band may require a low-latency random access process in various scenarios of an NR system. Accordingly, a 2-step random access procedure may be performed on an L-band as well.

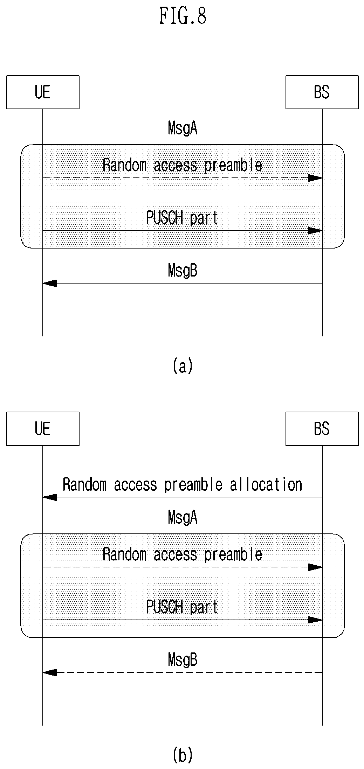

FIG. 8 illustrates a two-step random access procedure in a wireless communication system to which the present disclosure can be applied.

As shown in FIG. 8(a), a 2-step random access process may be configured in two steps of uplink signal transmission (referred to as message A, corresponding to PRACH preamble + Msg3 PUSCH) from a terminal to a base station and downlink signal transmission (referred to as message B, and corresponding to RAR + Msg4 PDSCH) from a base station to a terminal.

In addition, in a non-contention random access process, a random access preamble and a PUSCH part may be transmitted together as shown in FIG. 8(b).

Although not shown in FIG. 8, a PDCCH for scheduling message B may be transmitted from a base station to a terminal, which may be referred to as Msg. B PDCCH.

Dynamic waveform switching method

The above-described contents (NR frame structure, NTN system, etc.) may be applied in combination with the methods proposed in the present disclosure to be described later, or may be supplemented to clarify technical characteristics of the methods proposed in the present disclosure.

In addition, the methods to be described later are related to uplink transmission, which may be equivalently applied to a downlink signal transmission method in the above-described NR system or LTE system. It may be modified or replaced to fit terms, expressions, structures, etc. defined in each system so that the technical idea proposed in the present disclosure can be implemented in a corresponding system.

NR supports multiple numerologies (or subcarrier spacing (SCS)) to support various 5G services. For example, when the SCS is 15 kHz, it supports a wide area in traditional cellular bands. When the SCS is 30 kHz/60 kHz, it supports dense-urban, lower latency, and wider carrier bandwidth. When the SCS is 60 kHz or higher, it supports a bandwidth larger than 24.25 GHz to overcome phase noise.

The NR frequency band is defined by two types of frequency ranges (FR1, FR2). FR1 and FR2 can be configured as shown in Table 6 below. In addition, FR2 can mean a millimeter wave (mmW).

[Table 6]

| Frequency Range designation | Corresponding frequency range | Subcarrier Spacing |
| --- | --- | --- |
| FR1 | 410MHz - 7125MHz | 15, 30, 60kHz |
| FR2 | 24250MHz - 52600MHz | 60, 120, 240kHz |

Meanwhile, for UL coverage enhancement of the NR system, repeated transmission of the RACH preamble (i.e., random access preamble) is being considered. Here, it is necessary to define how beam operation and/or power control operate when a UE repeatedly transmits the PRACH preamble. Therefore, in this disclosure, a method for enabling/-disabling dynamic waveform switching is proposed.

Embodiment 1) Method for enabling/disabling dynamic waveform switching

Currently, in NR, it is defined that a base station configures/indicates which waveform to use among cyclic prefix OFDM (CP-OFDM) and discrete Fourier transform spread OFDM (DFT-S-OFDM) through RRC signaling (e.g., system information block 1 (SIB1), UE-specific RRC signaling, etc.).

DFT-S-OFDM can be generated by combining transform precoding and CP-OFDM. Transform precoding reduces the relatively high peak to average power (PAPR) associated with CP-OFDM. Hereinafter, in the present disclosure, configuring/indicating DFT-S-OFDM can be interpreted as configuring/indicating that transform precoding is enabled, whereas configuring/indicating CP-OFDM can be interpreted as configuring/indicating that transform precoding is disabled.

To explain in more detail what is defined in 3GPP TS 38.331, in case of a 4-step RACH procedure (i.e., a random access procedure), if the higher layer parameter/field "msg3-transformPrecoder" is indicated as enable in the RACH common configuration (RACH-ConfigCommon), DFT-S-OFDM is defined to be used as the UL waveform of Msg. 3 PUSCH. On the other hand, if the higher layer parameter/field "msg3-transformPrecoder" is absent, CP-OFDM is defined to be used as the UL waveform of Msg. 3 PUSCH. On the other hand, in case of a 2-step RACH procedure, if the higher layer parameter/field "msgA-TransformPrecoder" is indicated as enable in the Msg. A PUSCH configuration (MsgA-PUSCH-Config), DFT-S-OFDM is defined to be used as the waveform of Msg. A PUSCH. On the other hand, if the higher layer parameter/field "msgA-TransformPrecoder" is indicated as disable, CP-OFDM is defined to be used as the waveform of Msg. A PUSCH.

Finally, if the higher layer parameter/field "transformPrecoder" is indicated as enable in the PUSCH configuration (PUSCH-Config) or the configured grant configuration (ConfiguredGrantConfig) as a waveform of other UL channels (e.g., PUSCH other than normal PUSCH (i.e., configured grant (CG) PUSCH, configured PUSCH, etc.)) except for the Msg. 3 PUSCH and Msg. A PUSCH, it is defined to use DFT-S-OFDM, and if the higher layer parameter/field "transformPrecoder" is indicated as disable, it is defined to use CP-OFDM. Additionally, if the "transformPrecoder" parameter/field is not separately indicated, it is defined to follow the setting of "msg3-transformPrecoder".

According to one embodiment of the present disclosure, a new parameter may be introduced that indicates whether dynamic switching function/operation between two UL waveforms (i.e., CP-OFDM and DFT-S-OFDM) is supported.

When dynamic switching function is introduced between the two UL waveforms (i.e., CP-OFDM and DFT-S-OFDM), a UE needs to know in advance whether a corresponding base station supports the dynamic switching operation. Therefore, for example, it may be considered to introduce a new parameter/information/signaling for a base station to inform UEs of whether dynamic waveform switching is enabled/disabled. Alternatively, it may be considered to add new configuration values to the values that can be configured by parameters indicating the waveform (e.g., "transformPrecoder", "msgA-TransformPrecoder", "msg3-transformPrecoder"). Here, whether the dynamic switching operation is supported can be configured/indicated to a UE by a base station through RRC signaling (e.g., SIB1, cell specific RRC signaling, etc.).

Specifically, for example, parameters "transformPrecoder", "msg3-transformPrecoder", or "msgA-Transform-Precoder" that indicate waveforms may be maintained as they are, and a new parameter (e.g., Dynamic-waveform-switching) may be introduced. And, using the new parameter, a base station may configure/indicate a UE to enable or disable dynamic waveform switching. That is, a base station may configure/indicate either enable or disable with the Dynamic-waveform-switching value. Alternatively, only enable may be configured/indicated with the Dynamic-waveform-switching value, and disable may be configured/indicated by leaving the Dynamic-waveform-switching parameter blank (i.e., absent). Here, dynamic waveform switching can also be configured separately for each UL channel/signal (e.g., PUSCH, Msg. 3 PUSCH, and Msg. A PUSCH, etc.). If the new parameter (e.g., Dynamic-waveform-switching) is enabled, then a UE can be configured to interpret the signal/channel assuming that there is additional field/information indicating dynamic waveform switching for the specific signal/channel (e.g., DCI field transmitted via PDCCH or MAC-Control Element (CE) field, etc.). In other words, when dynamic-waveform-switching is enabled, a UE can transmit a UL signal/channel with a waveform indicated by DCI or MAC-CE (e.g., indicated by whether transform precoding is applied). In addition, if dynamic waveform switching is configured/indicated to be disabled by the new parameter (e.g., Dynamic-waveform-switching) or dynamic waveform switching is configured/indicated to be disabled by not indicating the new parameter, it can be defined that a UE configures the UL waveform according to a configuration value of the parameter that configures/indicates the UL waveform (e.g., "transformPrecoder", or "msg3-transformPrecoder", or "msgA-Transform-Precoder").

In addition, according to one embodiment of the present disclosure, when dynamic waveform switching is enabled, a default waveform can be determined according to the following method.

If dynamic waveform switching is enabled, a UE can be defined to determine a waveform configured/indicated as one of CP-OFDM and DTS-S-OFDM as a default waveform through a parameter indicating a waveform (e.g., "transformPrecoder", "msg3-transformPrecoder", or "msgA-TransformPrecoder"). Here, if a base station allows dynamic waveform switching from transmission of Msg. 3 PUSCH and/or Msg. A PUSCH, a UE can interpret the waveform configured through "msg3-transformPrecoder" or "msgA-TransformPrecoder" as the default waveform. Meanwhile, if a base station does not allow dynamic waveform switching in Msg. 3 PUSCH and/or Msg. A PUSCH transmission, but allows dynamic waveform switching from a normal/configured PUSCH, a UE can first interpret the waveform configured through "transformPrecoder" as the default waveform, and if "transformPrecoder" is not indicated, the UE can interpret the waveform configured through "msg3-transformPrecoder" as the default waveform.

Alternativley, even if a parameter that configures/indicates a UL waveform (e.g., "transformPrecoder", or "msg3-transformPrecoder", or "msgA-TransformPrecoder") is indicated, if dynamic waveform switching is enabled via a new parameter (e.g., Dynamic-waveform-switching), a UE may be configured/defined to ignore the configured values of the parameters that indicates the waveform. In this case, it may be defined that a waveform agreed upon in advance between a UE and a base station (i.e., specified in the standard specification) is configured as the default waveform.

Additionally, according to one embodiment of the present disclosure, the priority between the higher layer parameters/fields that configure/indicate the UL waveform and the dynamic indication according to the dynamic waveform switching being enabled may be determined in advance or configured by a base station.

For example, even if a parameter that configures/indicates a UL waveform (e.g., "transformPrecoder", or "msg3-transformPrecoder", or "msgA-TransformPrecoder") is indicated to a specific value (e.g., either enable or disable), if dynamic waveform switching is enabled through a new parameter (e.g., Dynamic-waveform-switching), a UE can follow the waveform that is dynamically configured/indicated through a specific signal/channel (e.g., DCI, MAC-CE, etc.) (i.e., ignore the existing parameter). In other words, if dynamic waveform switching is enabled through a new parameter (e.g., Dynamic-waveform-switching), the waveform to be used by a UE can be determined according to the dynamic configuration of a specific signal/channel (e.g., DCI, MAC-CE, etc.).

In the above description, the proposed newly introduced parameter can be configured/indicated together with the signaling/configuration (i.e., information element (IE)) in which the parameter indicating the waveform (e.g., "transformPrecoder", or "msg3-transformPrecoder", or "msgA-TransformPrecoder") is configured/indicated. That is, the proposed newly introduced parameter can be configured/indicated in the RACH common configuration (RACH-ConfigCommon), or the PUSCH configuration (PUSCH-Config), or the configured grant configuration (ConfiguredGrantConfig), or the Msg. A PUSCH configuration (MsgA-PUSCH-Config).

In addition, according to one embodiment of the present disclosure, whether to support a dynamic switching function/operation between two UL waveforms (i.e., CP-OFDM and DFT-S-OFDM) can be additionally indicated/configured in a parameter indicating the waveform.

For example, it may be considered to add one more value indicated by a parameter indicating a waveform (e.g., "transformPrecoder", or "msg3-transformPrecoder", or "msgA-TransformPrecoder"). In other words, while the parameters indicating the current waveform indicate one of 'enable' and 'disable', in a cell (or BWP) that supports dynamic waveform switching, the parameters may be defined to indicate one of three: i) 'enable', ii) 'disable', and iii) 'dynamic' (or 'dynamic switching'). In other words, the method may be configured/defined to expand from indicating one of the existing two states to indicating one of the three states.

In addition, the proposed method can be configured to be applied to all parameters that set the existing waveform, but it can also be applied only to parameters in specific cases. For example, it can be configured/defined to indicate one of the three states only to RRC parameters (e.g., "transformPrecoder") received after entering connected mode (i.e., in the PUSCH configuration (PUSCH-config) configured for each BWP), excluding parameters used during initial access. In this case, a UE can be configured/defined to operate as follows.

First, if a base station configures the RRC parameter (e.g., "transformPrecoder") value in the PUSCH configuration (PUSCH-config) (which can be configured for each BWP) to 'dynamic' (or 'dynamic switching'), a UE can determine that dynamic waveform switching is enabled (in the corresponding BWP). Then, the UE can determine that DCI to be transmitted thereafter will be transmitted with the field configuration for dynamic waveform switching, and can be configured/defined to interpret the corresponding DCI. For example, a 1-bit indication field (i.e., indicating either CP-OFDM or DFT-S-OFDM) in the DCI can be defined.

Here, if there is a 1-bit indication field for the waveform indication in DCI format 0_2 or in the case of DCI format 0_1, the waveform to be used by a UE for PUSCH transmission can be configured according to a value dynamically indicated by a base station. Specifically, if the RRC parameter (e.g., "transformPrecoder") value in the PUSCH configuration (PUSCH-config) (which can be set for each BWP) is set to 'dynamic' (or 'dynamic switching'), and a UE receives (or monitors) DCI format 0_1 or receives (or monitors) DCI format 0_2 in which a 1-bit indication field for the waveform indication exists, the UE may ignore the waveform configuration value configured/indicated in the parameters (e.g., "msg3-transformPrecoder" or "msgA-TransformPrecoder") used for initial access (transmitted in SIB, etc.) and transmit the PUSCH using the waveform dynamically configured/indicated via DCI.

On the other hand, if the RRC parameter (e.g., "transformPrecoder") value in the PUSCH configuration (PUSCH-config) (which can be set for each BWP) is set to 'dynamic' (or 'dynamic switching'), however a UE receives (or monitors) DCI format 0_0 or receives (or monitors) DCI format 0_2 in which there is no 1-bit indication field for the waveform indication, it may be necessary to define which waveform the UE should use to transmit the PUSCH. Therefore, in this case, the UE may be defined/configured to transmit the PUSCH using the waveform configured/indicated by the parameters (e.g., "msg3-transformPrecoder" or "msgA-TransformPrecoder") used for initial access (e.g., transmitted in SIB, etc.).

In addition, according to one embodiment of the present disclosure, a method may be considered to extend the values that the parameters indicating the waveform (e.g., "transformPrecoder", or "msg3-transformPrecoder", or "msgA-TransformPrecoder") may indicate to four (i.e., to indicate one of the four states). That is, if the previously proposed method was a method of defining the parameters to indicate one of i) 'enable', ii) 'disable', and iii) 'dynamic' (or 'dynamic switching'), the newly proposed method of extending to four may be considered to define the parameters to indicate one of i) 'enable', ii) 'disable', iii) 'dynamic' (or 'dynamic switching') and enabled by default, and iv) 'dynamic' (or 'dynamic switching') and disabled by default. In this case, a UE may operate as follows.

First, similar to the previously proposed method, if a base station configures the RRC parameter (e.g., "transformPrecoder") value in the PUSCH configuration (PUSCH-config) (which can be configured for each BWP) to i) 'dynamic' (or 'dynamic switching') and enabled by default or ii) 'dynamic' (or 'dynamic switching') and disabled by default, a UE can determine that dynamic waveform switching is enabled (in the corresponding BWP). Then, the UE can be configured/defined to determine that the DCI to be transmitted thereafter will be transmitted with the field configuration for dynamic waveform switching, and to interpret the DCI. For example, a 1-bit indication field (i.e., indicating one of CP-OFDM and DFT-S-OFDM) in the DCI can be defined.

Here, if there is a 1-bit indication field for the waveform indication in DCI format 0_2 or in the case of DCI format 0_1, the waveform to be used by a UE for PUSCH transmission can be configured according to a value dynamically indicated by a base station. Specifically, if the RRC parameter (e.g., "transformPrecoder") value in the PUSCH configuration (PUSCH-config) (which can be configured for each BWP) is i) set to 'dynamic' (or 'dynamic switching') and enabled by default, or ii) set to 'dynamic' (or 'dynamic switching') and disabled by default, and the UE receives (or monitors) DCI format 0_1 or receives (or monitors) DCI format 0_2 in which a 1-bit indication field for waveform indication exists, the UE may ignore the waveform configuration values configured/indicated in the parameters (e.g., "msg3-transformPrecoder" or "msgA-TransformPrecoder") used for initial access (e.g., transmitted in SIB, etc.), and transmit a PUSCH using a waveform dynamically configured/indicated via DCI.

On the other hand, if a UE receives (or monitors) DCI format 0_0 or receives (or monitors) DCI format 0_2 in which there is no 1 bit indication field for waveform indication, the UE may ignore the waveform configuration value configured/indicated by the parameters (e.g., "msg3-transformPrecoder" or "msgA-TransformPrecoder") used for initial access (e.g., transmitted in SIB, etc.) and may be defined/configured to transmit the PUSCH using the waveform configured/indicated by the RRC parameter (e.g., "transformPrecoder") value in the PUSCH configuration (PUSCH-config) (which can be configured per BWP). That is, in this case, if the value of the corresponding parameter is i) 'dynamic' (or 'dynamic switching') and enabled by default, the UE may be configured to transmit the PUSCH using DFT-s-OFDM. In addition, if the value of the corresponding parameter is 'dynamic' (or 'dynamic switching') and disabled by default, the UE can be configured to transmit PUSCH using CP-OFDM. The above-described proposed method has the advantage that it can be applied anywhere regardless of the primary cell (Pcell) or the secondary cell (Scell).

In addition, according to one embodiment of the present disclosure, the method of extending the number of states indicated by the parameter for configuring the waveform as proposed above may also affect other parameters for which the indication of a base station is determined according to the value of the parameter. For example, the parameter including an operation/expression such as "UE shall use for PUSCH with transform precoding" or an operation/expression such as "UE shall use for PUSCH without transform precoding" may be affected (e.g., MCS table transform precoding (mcs-TableTransformPrecoder) as in Table 7 below, MCS table transform precoding DCI 0_2 (mcs-TableTransformPrecoderDCI-0-2) as in Table 8 below, MCS table transform precoding (mcs-TableTransformPrecoder) as in Table 8 below, MCS table (mcs-Table), etc.). As another example, parameters that include expressions such as "without transform precoder (including CP-OFDM)" or operations/expressions such as "with transform precoding (DFT-S-OFDM)" may also be affected (e.g., transformPrecoderDisabled, transformPrecoderEnabled, etc. in Table 9 below). As another example, parameters that include expressions such as "when the transformPrecoder parameter is disabled" or "if transformPrecoder is disabled" may also be affected (e.g., resource block group size (rbg-Size) in Table 10 below, DMRS sequence initialization (dmrs-SeqInitialization) in Table 11 below).

[Table 7]

| mcs-TableTransformPrecoder, mcs-TableTransformPrecoderDCI-0-2 |
| --- |

(continued)

| Indicates which MCS table the UE shall use for PUSCH with transform precoding (see TS 38.214, clause 6.1.4.1) If the field is absent the UE applies the value 64QAM. The field mcs-TableTransformPrecoder applies to DCI format 0_0 and DCI format 0_1 and the field mcs-TableTransformPrecoderDCI-0-2 applies to DCI format 0_2 (see TS 38.214, clause 6.1.4.1). |
|---|

[Table 8]

| mcs-TableTransformPrecoder<br>Indicates the MCS table the UE shall use for PUSCH with transform precoding. If the field is absent the UE applies the value qam64.<br>mcs-Table<br>Indicates the MCS table the UE shall use for PUSCH without transform precoding. If the field is absent the UE applies the value qam64. |
|---|

[Table 9]

| transformPrecoderDisabled<br>Configuration of UL PTRS without transform precoder (with CP-OFDM).<br>transformPrecoderEnabled<br>Configuration of UL PTRS with transform precoder (DFT-S-OFDM). |
|---|

[Table 10]

| rbg-Size<br>Selection between configuration 1 and configuration 2 for RBG size for PUSCH. The UE does not apply this field if resourceAllocation is set to resourceAllocationType1. Otherwise, the UE applies the value config1 when the field is absent. Note: rbg-Size is used when the transformPrecoder parameter is disabled. |
|---|

[Table 11]

| dmrs-SeqInitialization<br>The network configures this field if transformPrecoder is disabled or when the value of the number of small data transmission (SDT) DMRS sequences (sdt-NrofDMRS-Sequences) is set to 1. Otherwise, the field is absent. |
|---|

If the parameters that configure the waveform as proposed above are extended to 3 or 4 states, the following sentences may be additionally included in the actions/expressions related to the transform precoder in the above-mentioned parameters. For example, if a method of configuring to one of the 3 states is considered, "or if transformPrecoder is dynamic (or dynamic switching)" may be added after a specific operation/sentence (e.g., "if transformPrecoder is disabled" or "when the transformPrecoder parameter is disabled"). Alternatively, "The network configures this field if transformPrecoder is dynamic (or dynamic switching)" may be added. As another example, if a way to configure it to one of the 4 states is considered, "or if transformPrecoder is dynamic (or dynamic switching') and disabled (or enable) as default" could be added after a specific operation/sentence (e.g., "if transformPrecoder is disabled" or "when the transformPrecoder parameter is disabled"). Alternatively, "The network configures this field if transformPrecoder is dynamic (or dynamic switching') and disabled (or enable) as default" could be added.

Embodiment 2) Method for configuring enable/disable of dynamic waveform switching

A method to allow dynamic waveform switching before a UE enters the RRC connected state/mode can be considered. That is, a new parameter indicating whether dynamic waveform switching is allowed can be transmitted through RACH configuration (e.g., RACH-ConfigCommon, RACH-ConfigDedicated, etc.) as in the previously proposed method. In this case, if the parameter indicates enable, the UE can determine that dynamic waveform switching is allowed before entering the RRC connected state. As a result, even if a base station configures/indicates the waveform of Msg. 3 PUSCH or Msg. A PUSCH to be commonly used by all UEs in the cell through the "msg3-transformPrecoder" or "msgA-TransformPrecoder" parameter of the higher layer signaling (e.g., SIB, etc.) to which the RACH configuration is transmitted, the waveform for Msg. 3 PUSCH and/or Msg. A PUSCH transmission can be dynamically configured/indicated to individual UEs (or UE groups, or all UEs) thereafter.

1) In the first method, the waveform for Msg. 3 PUSCH can be configured via a random access response (RAR) grant. For example, the reserved 1-bit field of an RAR can be used to configure/indicate one of CP-OFDM and DFT-S-OFDM. Here, since multiple UEs using the same random access preamble identifier (RAPID) in the same physical random access channel (PRACH) occasion (RO) can receive the same RAR, the waveform of a group of specific UEs can be dynamically configured/indicated when using the RAR grant.

2) Alternatively, the waveform for Msg. 3 PUSCH can be configured via PDCCH/DCI (i.e., DCI format 1_0 with CRC bits scrambled with RA-RNTI) that schedules a PDSCH carrying an RAR. For example, a reserved 1 bit field can be used in a PDCCH (i.e., DCI) that schedules a PDSCH carrying an RAR to be configured/indicated as either CP-OFDM or DFT-S-OFDM. In this case, multiple UEs using the same RO can receive DCI scrambled with the corresponding RA-RNTI since they have the same RA-RNTI. Therefore, in this case as well, the waveform of a specific UE group can be configured/indicated dynamically.

3) Alternatively, a base station may dynamically configure/indicate a waveform for retransmission of Msg. 3 PUSCH and/or Msg. A PUSCH. That is, in a situation where a UE transmits the initial transmission for Msg. 3 PUSCH and/or Msg. A PUSCH using a UL waveform configure/indicated through higher layer signaling, a base station may not accurately receive the initial transmission and may configure/indicate retransmission for Msg. 3 PUSCH and/or Msg. A PUSCH to a UE (i.e., transmit DCI format 0_0 in which CRC bits are scrambled with TC-RNTI). In this case, the reserved 1 bit field of the corresponding DCI may be configured/indicated as one of CP-OFDM and DFT-S-OFDM.

In the above-described operations, a base station can dynamically change the waveform for Msg. 3 PUSCH of a UE performing the initial access based on the reception performance (hereinafter, a specific criterion) of PRACH preambles from the UE. In addition, the base station can configure/indicate so that the waveform switching of Msg. 3 PUSCH can be requested using a specific RACH resource (e.g., a specific RACH slot, a specific RO index, a specific preamble index, etc.). In this case, a UE that wants to change the waveform of Msg. 3 PUSCH configured through higher layer signaling can transmit the PRACH preamble using the specific RACH resource. In this case, the base station can receive the PRACH preamble transmitted to the corresponding RACH resources and then dynamically configure/indicate the waveform of Msg. 3 PUSCH using one of the proposed methods. Alternatively, a (specific) preamble repetition number can be used to configure/indicate the UE to request dynamic waveform switching. That is, if the base station configures/indicates in advance the preamble used for the (specific) preamble repetition number, and the UE selects the preamble and performs preamble repetition, the base station can determine that the UE that selected and transmitted the preamble is requesting dynamic waveform switching. Then, if the base station determines that it satisfies the above-mentioned specific criteria, the base station can dynamically configure/indicate the waveform of Msg. 3 PUSCH through one of the above-mentioned proposed methods.

In addition, a UE in RRC idle/inactive state/mode may report to a base station that it has a UE capability for dynamic waveform switching. If the UE has the capability for dynamic waveform switching, the base station may dynamically configure/indicate the UL waveform to the UE. Accordingly, if the base station configures a specific RACH resource for the purpose of requesting waveform switching of Msg. 3 PUSCH, it may be configured/defined that only UEs having UE capability for dynamic waveform switching transmit the PRACH preamble in the corresponding RACH resource. In other words, specific RACH resource(s) may be configured exclusively for UEs with UE capability for dynamic waveform switching or may be restricted to be used only by the UEs (i.e., error processing, etc. when used by other UEs). In addition, it may be desirable for only a UE that has the UE capability for dynamic waveform switching and wants to change the waveform of Msg. 3 PUSCH configured through higher layer signaling to transmit the PRACH preamble on the corresponding RACH resource. That is, even if there is the UE capability for dynamic waveform switching, a UE that determines that it does not necessarily need to change the waveform of Msg. 3 PUSCH configured through higher layer signaling may not transmit the PRACH preamble on the corresponding RACH resource and may freely select the RACH resource.

Embodiment 3) Configuring method by UE/base station when dynamic waveform switching is allowed after UE enters RRC connected state/mode

In addition, dynamic waveform switching is not allowed before a UE enters the RRC connected state/mode, and dynamic waveform switching can be allowed after entering the RRC connected state/mode. As in the previously proposed method, if a new parameter indicating whether dynamic waveform switching is allowed is transmitted along with RRC establishment (e.g., RRC setup message, etc.) and the parameter indicates enable, the UE can determine that dynamic waveform switching is allowed after entering the RRC connected state. In this case, the UE in the RRC idle/inactive state/mode can be configured to use the UL waveform configured/indicated through higher layer signaling (e.g., SIB, etc.). In addition, if the UE has a UE capability for supporting dynamic waveform switching before entering the RRC connected state/mode, the UE can report this to the base station. The base station that receives the UE capability for dynamic waveform switching can configure/indicate the UE on whether to allow dynamic waveform switching.

1) In the first method, an indication for dynamic waveform switching can be allowed in both the fall-back DCI (e.g., DCI formats 0_0, 1_0) and/or the non-fall-back DCI (e.g., DCI formats 0_1, 0_2, 1_1, 1_2). That is, the waveform can be dynamically configured/indicated to either CP-OFDM or DFT-S-OFDM using a 1 bit field in both the fall-back DCI or the non-fall-back DCI.

Here, for example, in case of fall-back DCI, since DCI field may not be available, waveform can be configured/defined to be determined based on a value indicated through a specific existing DCI field (or a combination of specific existing DCI fields). Alternatively, in case of fall-back DCI, waveform most recently dynamically indicated through non-fall-back DCI can be configured to be used. If the time point at which a UE receives the fall-back DCI is before the time point at which it receives the non-fall-back DCI, the UE can be configured/defined to follow UL waveform indicated by higher layer signaling (e.g., SIB, UE specific RRC signaling, etc.).

Alternatively, not only the fall-back DCI but also the non-fall-back DCI can be configured/defined so that the waveform is determined based on the value indicated via the existing DCI field (or via a combination of specific existing DCI fields).

2) In addition, dynamic waveform switching may be allowed only in non-fall-back DCI, not in fall-back DCI. That is, in the case of fall-back DCI, a UE may follow the UL waveform indicated by higher layer signaling (e.g., SIB, UE-specific RRC signaling, etc.) (without dynamic waveform switching). On the other hand, only in non-fall-back DCI, one of CP-OFDM and DFT-S-OFDM may be dynamically configured/indicated to the UE using a 1 bit field. As a result, the configuration/indication of dynamic waveform switching may be defined/configured differently depending on the DCI format. For example, fall-back DCIs such as DCI format 0_0, 1_0 do not configure/indicate dynamic waveform switching, and the UE may follow the configuration of higher layer signaling (e.g., msg3-transformPrecoder). Additionally, non-fall-back DCI such as DCI format 0_1, 1_1, etc. can configure/indicate dynamic waveform switching.

Alternatively, the waveform can be configured/defined to be determined based on a value indicated via an existing DCI field (or a combination of specific existing DCI fields) in the non-fall-back DCI.

In addition, since DCI formats 0_2 and 1_2 have configurable DCI fields, the explicit switching indicator field (i.e., the field for dynamic waveform switching indication) that can be introduced in DCI formats 0_1 and 1_1 cannot always be configured. Therefore, only when the explicit switching indicator field (i.e., the field for dynamic waveform switching indication) is configured in DCI formats 0_2 and 1_2, the UE can determine the waveform according to the value of the field. In addition, if the field for the dynamic waveform switching indication is not configured in DCI formats 0_2 and 1_2, the method introduced in the fallback DCI of DCI formats 0_0 and 1_0 can be configured/defined for the UE to use (i.e., the waveform set by higher layer signaling can be used).

In addition, if dynamic waveform switching is enabled according to the above-described embodiment, whether dynamic waveform switching is supported may vary depending on the DCI type/format. For example, fall-back DCI (e.g., DCI format 0_0, 1_0) does not support dynamic waveform switching, and the UE can follow the configuration value (i.e., waveform) of higher layer signaling (e.g., msg3-transformPrecoder). In addition, non-fall-back DCI (e.g., DCI format 0_1, 0_2, 1_1, 1_2) supports dynamic waveform switching and can indicate a waveform through DCI.

Alternatively, dynamic waveform switching may not be supported in non-scheduling DCI, and dynamic waveform switching may be supported in scheduling DCI. In this case, in the case of non-scheduling DCI, a UE may follow the configuration value (i.e., waveform) of higher layer signaling (e.g., msg3-transformPrecoder).

Meanwhile, when dynamically configuring/indicating a waveform with DCI, one of the following methods may be considered. The method below may be applied when adding a 1-bit field, or when reinterpreting and indicating a specific 1-bit field among existing fields.

Alternative (Alt 1) Method of directly configuring whether transform precoding is enabled or disabled: When this method is applied, a UE may be defined/configured to ignore the parameter value (e.g., msg3-transformPrecoder) indicated through higher layer signaling from a base station, and follow the value indicated by the corresponding DCI (or MAC CE) field. In other words, the DCI (or MAC CE) field value indicating the waveform may have priority over the higher layer signaling.

Table 12 illustrates the configuration of a DCI field according to one embodiment of the present disclosure.

[Table 12]

| DCI field value | 0 (or 1) | 1 (or 0) |
|---|---|---|
| Contents | Transform precoding is disabled | Transform precoding is enabled |

Alt 2) Method for configuring whether the transform precoding value is the same as or different from the value indicated through the higher layer signaling: This corresponds to an operation in which the transform precoding method (i.e., waveform) is determined depending on the parameter value (e.g., msg3-transformPrecoder) indicated by a base station through the higher layer signaling. That is, if the same transform precoding is indicated to be used by dynamic signaling (DCI or MAC CE), a UE can understand/consider that the same transform precoding method (i.e., waveform) as the parameter value (e.g., msg3-transformPrecoder) indicated through the higher layer signaling is used. On the other hand, if a different transform precoding is indicated to be used by dynamic signaling (DCI or MAC CE), the UE can understand/consider that the parameter value (e.g., msg3-transformPrecoder) indicated through the higher layer signaling is used and that a different transform precoding method (i.e., waveform) is used.

Table 13 illustrates the configuration of a DCI field according to one embodiment of the present disclosure.

[Table 13]

| DCI field value | 0 (or 1) | 1 (or 0) |
|---|---|---|
| Contents | Same transform precoding as upper layer signaling is used | Different transform precoding than upper layer signaling is used |

Alt 3) Method in which transform precoding value is set based on waveform set/transmitted immediately before: For a UE to which the base station has not instructed dynamic waveform switching, the parameter value (e.g., msg3-transformPrecoder) instructed through upper layer signaling corresponds to the reference transform precoding method (i.e., waveform), and for a UE to which the base station has instructed dynamic waveform switching, the value set and transmitted through dynamic waveform switching immediately before may correspond to the reference transform precoding method (i.e., waveform). In this case, when a transform precoding (i.e., waveform) change instruction comes by dynamic signaling (DCI or MAC CE), the transform precoding method (i.e., waveform) may be changed to a different transform precoding method (i.e., waveform) from the reference transform precoding method (i.e., waveform).

Table 14 illustrates the configuration of a DCI field according to one embodiment of the present disclosure.

[Table 14]

| DCI field value | 0 (or 1) | 1 (or 0) |
|---|---|---|
| Contents | If the dynamic waveform switching field exists for the previous dynamic grant (DG) PUSCH, the same transform precoding as the previous DG PUSCH transmission is used, otherwise the same transform precoding as the higher layer signaling is used. | If the dynamic waveform switching field for the previous DG PUSCH is present, a different transform precoding than the previous DG PUSCH transmission is used, otherwise a different transform precoding than the higher layer signaling is used. |

The comparison between Alt 2 and Alt 3 among the above methods is as follows. In Alt 2, whenever an attempt is made to use/configure a precoding scheme different from the transform precoding scheme (i.e., waveform) configured via higher layer signaling, a different transform precoding must be configured/indicated to be used. On the other hand, in Alt 3, a transform precoding scheme (i.e., waveform) different from the higher layer signaling is configured to be used only once, and thereafter, the same transform precoding scheme (i.e., waveform) as the immediately preceding DG PUSCH is indicated to be used. Therefore, a transform precoding scheme (i.e., waveform) different from the higher layer signaling can always be configured.

In the proposed method described above, specific existing DCI fields that can be used for waveform indication and DCI fields that can correspond to combinations thereof, for example, an MCS field, a new data indicator (NDI) field, a redundancy version (RV) field, a time domain resource allocation (TDRA) field, a frequency domain resource allocation (FDRA) field, etc. can be used.

Meanwhile, dynamic waveform switching for PUSCH transmission can be allowed in RACH procedure (e.g., contention free random access (CFRA)) indicated by a PDCCH order. That is, similar to the previously proposed method, a method of configuring a waveform for a PUSCH through an RAR grant can be considered. For example, one of CP-OFDM and DFT-S-OFDM can be configured/indicated to a UE using the reserved 1 bit field of an RAR. Alternatively, a method of configuring/indicating a waveform for PUSCH through DCI format 1_0 (CRC scrambled by C-RNTI and all bits of FDRA field set to 1) indicating a PDCCH order can be considered. For example, the waveform can be configured/indicated as either CP-OFDM or DFT-S-OFDM using the reserved field 1 bit of DCI format 1_0 indicating the PDCCH order.

In addition, a method of switching the waveform to be used by a UE implicitly through BWP switching can be considered. That is, this method can designate the waveform to be used in each BWP through a specific parameter (e.g., RACH common configuration (RACH-ConfigCommon), PUSCH configuration (PUSCH-Config), or Configured grant configuration (ConfiguredGrantConfig), etc.) within the BWP configuration (e.g., BWP uplink (BWP-Uplink), BWP common (BWP-common), or BWP dedicated (BWP-Dedicated), etc.) that configures transmission-related parameters for each BWP. In this case, the UE can perform PUSCH transmission using the waveform designated to the most recently indicated (i.e., the most recently indicated) currently active BWP. In this way, when waveform switching is introduced implicitly via BWP switching, if the base station does not configure a separate UL waveform in the BWP configuration (e.g., does not separately indicate a value for the "transformPrecoder" parameter that can be newly added to the BWP configuration), the UE can follow the UL waveform indicated by higher layer signaling (e.g., SIB, UE-specific RRC signaling, etc.).

Meanwhile, it can be considered that the base station uses the newly introduced parameter (e.g., Dynamic-waveform-switching) proposed above to configure/indicate whether to allow BWP-specific (implicit) dynamic waveform switching through BWP switching. The UE can know whether the base station allows BWP-specific (implicit) dynamic waveform switching through the parameter, and if allowed, it can be configured to determine whether to switch the waveform to be used by the UE during BWP switching. If the base station does not allow BWP-specific (implicit) dynamic waveform switching, the UE can be configured to follow the existing NR operation.

Among the above-described embodiments, "can be configured/indicated as one of CP-OFDM and DFT-S-OFDM using a 1-bit field" may mean, for example, "if a 1-bit field is used as a "transformPrecoder" field and the field indicates enable, the UE is configured to use DTS-S-OFDM for uplink transmission, and if the field indicates disable, the UE is configured to use CP-OFDM for uplink transmission."

In addition, although the above-described embodiments propose methods for specifying/indicating a waveform of CP-OFDM or DTS-S-OFDM using a 1-bit field, the proposed methods may be used in a different way (e.g., by utilizing a specific 1-bit field or based on a configuration value of a specific DCI field) to indicate to change to a waveform different from the most recently configured/indicated waveform (including a waveform that is dynamically indicated). That is, if the most recently configured/indicated waveform (including a waveform that is dynamically instructed) is CP-OFDM (or DFT-S-OFDM), a method of indicating to change to DFT-S-OFDM (or CP-OFDM) through the above method may be used.

Alternatively, it may be indicated to change from the waveform configured/indicated by the most recent higher layer signaling (e.g., SIB, UE specific RRC signaling). That is, if CP-OFDM (or DFT-S-OFDM) is indicated via higher layer signaling, the dynamic waveform switching method may be configured to be used only when a base station intends to indicate a UE to DFT-S-OFDM (or CP-OFDM).

The proposed method can be set/applied to other UL signals/channels such as MSG3 PUSCH, MSGA Preamble/PUSCH and/or PUSCH/PUCCH.

In addition, since examples of the proposed method described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) can be notified by a base station to a UE through a predefined signal (e.g., a physical layer signal or a higher layer signal), or a rule can be defined to notify. In addition, the higher layer in the present disclosure can include one or more of functional layers such as MAC, RLC (Radio Link Control), PDCP (Packet Data Convergence Protocol), RRC, and SDAP (Service Data Adaption Protocol).

The methods, embodiments or descriptions for implementing the method proposed in the present disclosure may be applied separately, or one or more methods (or embodiments or descriptions) may be applied in combination.

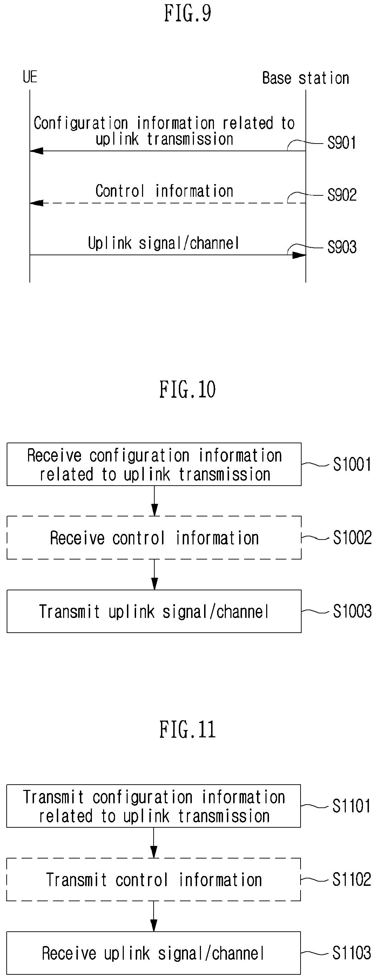

FIG. 9 illustrates a signaling method for an uplink transmission and reception method according to an embodiment of the present disclosure.

FIG. 9 illustrates signaling between a base station (e.g., TRP 1, TRP 2) and a UE to which the methods proposed in the present disclosure can be applied. Here, the UE/base station is only an example, and various devices can be applied instead. FIG. 9 is only for convenience of explanation and does not limit the scope of the present disclosure. In addition, some of the step(s) illustrated in FIG. 9 may be omitted depending on the situation and/or setting.

Meanwhile, although not illustrated in FIG. 9, a UE may transmit UE capability information indicating that it has an ability to support dynamic waveform switching to a base station.

Referring to FIG. 9, a UE receives configuration information related to uplink transmission from a base station (S901).

Here, the configuration information related to uplink transmission may include information (hereinafter, first information) on whether dynamic waveform switching for uplink transmission is supported/allowed. In other words, the first information may be information indicating/configuring whether dynamic waveform switching for uplink transmission is enabled or disabled. Alternatively, the first information may be information indicating/configuring whether the application of transform precoding for uplink transmission is dynamically changed/configured.

Here, according to the embodiments described above, the first information (or the configuration information including the first information) may be individually provided for each BWP (or each cell).

Here, the uplink transmission may include a PUSCH, a PUCCH, a PRACH, an SRS, etc. Accordingly, the configuration information related to the uplink transmission may correspond to RACH common configuration (RACH-ConfigCommon), Msg. A PUSCH configuration (MsgA-PUSCH-Config), PUSCH configuration (PUSCH-Config), PUCCH configuration (PUCCH-Config), etc.

The configuration information can be transmitted via higher layer signaling (e.g., SIB, RRC signaling, etc.).

For example, according to the above-described embodiment 1, a new parameter is defined/introduced that indicates/configures whether dynamic waveform switching is supported/allowed, and the first information can be provided via the new parameter.

Alternatively, an additional state that can be indicated/configured in a parameter that indicates a waveform for an existing uplink transmission (i.e., indicates that transform precoding is enabled or disabled) is defined/introduced, and the first information can be provided (i.e., indicated/configured) through the additional state.

In addition, according to the above-described embodiment 2, dynamic waveform switching can be supported/allowed before (including after) a UE enters the RRC connected state. In this case, the first information can be transmitted through RACH configuration (e.g., RACH-ConfigCommon, RACH-ConfigDedicated, etc.).

In addition, according to the above-described embodiment 3 described above, dynamic waveform switching may be supported/allowed only after a UE enters the RRC connected state. In this case, the first information may be transmitted via RRC establishment (e.g., an RRC setup message, etc.). In addition, the first information may be transmitted via a PUSCH configuration (PUSCH-Config), a PUCCH configuration (PUCCH-Config), etc.

A UE can receive control information (i.e., downlink control information) for scheduling/triggering uplink transmission (i.e., uplink signal/channel, e.g., PRACH, PUSCH, PUCCH, SRS, etc.) from a base station (S902).

Here, according to the embodiments described above, the control information may include information (hereinafter, second information) for indicating whether transform precoding for the PUSCH is enabled or disabled, as indicated by the first information that dynamic waveform switching is supported (e.g., dynamic waveform switching is enabled).

Here, the second information may be information for indicating/configuring whether the waveform for uplink transmission is CP-OFDM or DFT-S-OFDM. In other words, the second information may be information for indicating/configuring whether transform precoding for uplink transmission is enabled or disabled (i.e., whether transform precoding is applied or not applied).

In addition, according to the embodiments described above, the control information may be MAC CE (e.g., RAR), in which case it may be transmitted via a PDSCH. Or, the control information may be DCI, in which case it may be transmitted via PDCCH. In addition, if control information is not required for transmission of an uplink signal/channel (e.g., in the case of transmission of the first message for the random access procedure), this step may be omitted.

For example, according to the above-described embodiment 2, the control information may be provided to a UE within a random access procedure (e.g., via a DCI scheduling a PDSCH carrying an RAR grant, a DCI scheduling retransmission of a Msg. 3 PUSCH and/or a Msg. A PUSCH, etc.).

In addition, according to the above-described embodiment 3, the control information may be provided to a UE (e.g., via a DCI scheduling a PUSCH, etc.) after the UE enters an RRC connected state/mode.

In addition, for example, a 1-bit field (e.g., a dynamic waveform switching indication field) for indicating whether the transform precoding is enabled or disabled may be included in the control information. That is, the second information may be provided to a UE through the 1-bit field (e.g., a dynamic waveform switching indication field).

In addition, according to the embodiments described above, when the control information is DCI, the second information (e.g., a 1-bit dynamic waveform switching indication field) may be individually configurable for each DCI format (e.g., DCI format 0_1 or 0_2). In other words, the 1-bit field (e.g., a 1-bit dynamic waveform switching indication field) for indicating whether the transform precoding is enabled or disabled may be individually configurable for each DCI format.

In addition, according to the above-described embodiment 3, the second information (e.g., a 1-bit dynamic waveform switching indication field) can configure/indicate a waveform for uplink transmission as one of CP-OFDM and DFT-S-OFDM. In other words, the second information (e.g., a 1-bit dynamic waveform switching indication field) can indicate whether transform precoding is enabled or disabled for uplink transmission.

In addition, the second information (e.g., a 1-bit dynamic waveform switching indication field) may indicate whether transform precoding is enabled or disabled for uplink transmission by indicating whether to be the same as an indication value of enabled or disabled for transform precoding by higher layer signaling (e.g., higher layer parameter "transformPrecoder", "msg3-transformPrecoder" or "msgA-TransformPrecoder").

Additionally, the second information (e.g., a 1-bit dynamic waveform switching indication field) may indicate whether transform precoding is enabled or disabled for uplink transmission by indicating whether to be the same as whether the transform precoding for the most recent PUSCH is the same as applied.

A UE transmits an uplink transmission (i.e., an uplink signal/channel, for example, PRACH, PUSCH, PUCCH, SRS, etc.) to a base station (S903).

Here, based on the control information (e.g., DCI, MAC CE) including the second information (e.g., a 1-bit dynamic waveform switching indication field), whether to apply transform precoding for uplink transmission can be determined according to the second information (i.e., a waveform for uplink transmission can be determined).

Here, even if the enabled or disabled of transform precoding is indicated/configured by higher layer signaling (e.g., higher layer parameter "transformPrecoder", "msg3-transformPrecoder" or "msgA-TransformPrecoder"), if the control information (e.g., DCI, MAC CE) includes the second information (e.g., a 1-bit dynamic waveform switching indication field), the enabled or disabled indication value for transform precoding by higher layer signaling can be ignored. That is, a UE can prioritize the second information (e.g., a 1-bit dynamic waveform switching indication field) in the control information (e.g., DCI, MAC CE) over the higher layer signaling.

In addition, whether to apply the transform precoding to the PUSCH can be determined (i.e., a waveform for uplink transmission can be determined) based on higher layer signaling (e.g., higher layer parameter "transformPrecoder", "msg3-transformPrecoder" or "msgA-TransformPrecoder") based on the control information (e.g., DCI, MAC CE) not including the second information (e.g., a 1-bit dynamic waveform switching indication field). For example, even if the first information indicates that dynamic waveform switching is supported, if the DCI (e.g., a DCI format 0_2 in which a DCI field is configurable) does not include the second information (e.g., a dynamic waveform switching indication field of 1 bit), whether to apply the transform precoding to the PUSCH can be determined based on an indication value of enabled or disabled for transform precoding by higher layer signaling (i.e., a waveform for uplink transmission can be determined).

Here, the uplink transmission may include a PUSCH/SRS/PUCCH/PRACH, etc. For example, in case of a PUSCH, the control information may correspond to DCI for scheduling the PUSCH, in case of an SRS, the control information may correspond to DCI for triggering transmission of the SRS (in case of aperiodic SRS transmission), and in case of a PUCCH, the control information may correspond to DCI for scheduling, for example, a PDSCH. In addition, the uplink transmission may correspond to MSG1 (i.e., PRACH or random access preamble transmitted on PRACH) and/or MSG3 (i.e., PDSCH scheduled by random access response UL grant) in case of a 4-step random access procedure (see FIG. 7), and may correspond to MSGA (i.e., PRACH and PUSCH carrying random access preamble) in case of a 2-step random access procedure (see FIG. 8).

FIG. 10 is a diagram illustrating an operation of a UE for an uplink transmission and reception method according to an embodiment of the present disclosure.

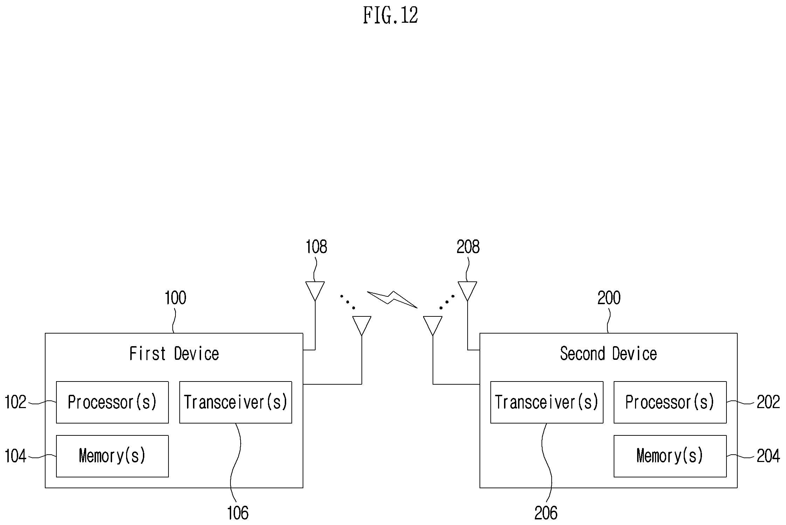

FIG. 10 illustrates an operation of a UE based on the proposed methods. The example of FIG. 10 is provided for convenience of explanation and does not limit the scope of the present disclosure. Some step(s) illustrated in FIG. 10 may be omitted depending on circumstances and/or settings. In addition, the UE in FIG. 10 is only an example and may be implemented as a device illustrated in FIG. 12 below. For example, the processor (102/202) of FIG. 12 may control the transceiver (106/206) to transmit and receive channels/signals/data/information, etc., and may also control the processor (102/202) of FIG. 12 to store transmitted or received channels/signals/data/information, etc. in the memory (104/204).

In addition, the operation of FIG. 10 may be processed by one or more processors (102, 202) of FIG. 12, and the operation of FIG. 10 may be stored in a memory (e.g., one or more memories (104, 204) of FIG. 12) in the form of a command/program (e.g., an instruction, an executable code) for driving at least one processor (e.g., 102, 202) of FIG. 12.

Meanwhile, although not illustrated in FIG. 10, a UE may transmit UE capability information indicating that it has an ability to support dynamic waveform switching to a base station.

Referring to FIG. 10, a UE receives configuration information related to uplink transmission from a base station (S1001).

Here, the configuration information related to uplink transmission may include information (hereinafter, first information) on whether dynamic waveform switching for uplink transmission is supported/allowed. In other words, the first information may be information indicating/configuring whether dynamic waveform switching for uplink transmission is enabled or disabled. Alternatively, the first information may be information indicating/configuring whether the application of transform precoding for uplink transmission is dynamically changed/configured.

Here, according to the embodiments described above, the first information (or the configuration information including the first information) may be individually provided for each BWP (or each cell).

Here, the uplink transmission may include a PUSCH, a PUCCH, a PRACH, an SRS, etc. Accordingly, the configuration information related to the uplink transmission may correspond to RACH common configuration (RACH-ConfigCommon), Msg. A PUSCH configuration (MsgA-PUSCH-Config), PUSCH configuration (PUSCH-Config), PUCCH configuration (PUCCH-Config), etc.

For example, according to the above-described embodiment 1, a new parameter is defined/introduced that indicates/configures whether dynamic waveform switching is supported/allowed, and the first information can be provided via the new parameter.

Alternatively, an additional state that can be indicated/configured in a parameter that indicates a waveform for an existing uplink transmission (i.e., indicates that transform precoding is enabled or disabled) is defined/introduced, and the first information can be provided (i.e., indicated/configured) through the additional state.

In addition, according to the above-described embodiment 2, dynamic waveform switching can be supported/allowed before (including after) a UE enters the RRC connected state. In this case, the first information can be transmitted through RACH configuration (e.g., RACH-ConfigCommon, RACH-ConfigDedicated, etc.).

In addition, according to the above-described embodiment 3 described above, dynamic waveform switching may be supported/allowed only after a UE enters the RRC connected state. In this case, the first information may be transmitted via RRC establishment (e.g., an RRC setup message, etc.). In addition, the first information may be transmitted via a PUSCH configuration (PUSCH-Config), a PUCCH configuration (PUCCH-Config), etc.

A UE can receive control information (i.e., downlink control information) for scheduling/triggering uplink transmission (i.e., uplink signal/channel, e.g., PRACH, PUSCH, PUCCH, SRS, etc.) from a base station (S1002).

Here, according to the embodiments described above, the control information may include information (hereinafter, second information) for indicating whether transform precoding for the PUSCH is enabled or disabled, as indicated by the first information that dynamic waveform switching is supported (e.g., dynamic waveform switching is enabled).

Here, the second information may be information for indicating/configuring whether the waveform for uplink transmission is CP-OFDM or DFT-S-OFDM. In other words, the second information may be information for indicating/configuring whether transform precoding for uplink transmission is enabled or disabled (i.e., whether transform precoding is applied or not applied).

In addition, according to the embodiments described above, the control information may be MAC CE (e.g., RAR), in which case it may be transmitted via a PDSCH. Or, the control information may be DCI, in which case it may be transmitted via PDCCH. In addition, if control information is not required for transmission of an uplink signal/channel (e.g., in the case of transmission of the first message for the random access procedure), this step may be omitted.

For example, according to the above-described embodiment 2, the control information may be provided to a UE within a random access procedure (e.g., via a DCI scheduling a PDSCH carrying an RAR grant, a DCI scheduling retransmission of a Msg. 3 PUSCH and/or a Msg. A PUSCH, etc.).

In addition, according to the above-described embodiment 3, the control information may be provided to a UE (e.g., via a DCI scheduling a PUSCH, etc.) after the UE enters an RRC connected state/mode.

In addition, for example, a 1-bit field (e.g., a dynamic waveform switching indication field) for indicating whether the transform precoding is enabled or disabled may be included in the control information. That is, the second information may be provided to a UE through the 1-bit field (e.g., a dynamic waveform switching indication field).

In addition, according to the embodiments described above, when the control information is DCI, the second information (e.g., a 1-bit dynamic waveform switching indication field) may be individually configurable for each DCI format (e.g., DCI format 0_1 or 0_2). In other words, the 1-bit field (e.g., a 1-bit dynamic waveform switching indication field) for indicating whether the transform precoding is enabled or disabled may be individually configurable for each DCI format.

In addition, according to the above-described embodiment 3, the second information (e.g., a 1-bit dynamic waveform switching indication field) can configure/indicate a waveform for uplink transmission as one of CP-OFDM and DFT-S-OFDM. In other words, the second information (e.g., a 1-bit dynamic waveform switching indication field) can indicate whether transform precoding is enabled or disabled for uplink transmission.

In addition, the second information (e.g., a 1-bit dynamic waveform switching indication field) may indicate whether transform precoding is enabled or disabled for uplink transmission by indicating whether to be the same as an indication value of enabled or disabled for transform precoding by higher layer signaling (e.g., higher layer parameter "transformPrecoder", "msg3-transformPrecoder" or "msgA-TransformPrecoder").

Additionally, the second information (e.g., a 1-bit dynamic waveform switching indication field) may indicate whether transform precoding is enabled or disabled for uplink transmission by indicating whether to be the same as whether the transform precoding for the most recent PUSCH is the same as applied.

A UE transmits an uplink transmission (i.e., an uplink signal/channel, for example, PRACH, PUSCH, PUCCH, SRS, etc.) to a base station (S1003).

Here, based on the control information (e.g., DCI, MAC CE) including the second information (e.g., a 1-bit dynamic waveform switching indication field), whether to apply transform precoding for uplink transmission can be determined according to the second information (i.e., a waveform for uplink transmission can be determined).

Here, even if the enabled or disabled of transform precoding is indicated/configured by higher layer signaling (e.g., higher layer parameter "transformPrecoder", "msg3-transformPrecoder" or "msgA-TransformPrecoder"), if the control information (e.g., DCI, MAC CE) includes the second information (e.g., a 1-bit dynamic waveform switching indication field), the enabled or disabled indication value for transform precoding by higher layer signaling can be ignored. That is, a UE can prioritize the second information (e.g., a 1-bit dynamic waveform switching indication field) in the control information (e.g., DCI, MAC CE) over the higher layer signaling.

In addition, whether to apply the transform precoding to the PUSCH can be determined (i.e., a waveform for uplink transmission can be determined) based on higher layer signaling (e.g., higher layer parameter "transformPrecoder", "msg3-transformPrecoder" or "msgA-TransformPrecoder") based on the control information (e.g., DCI, MAC CE) not including the second information (e.g., a 1-bit dynamic waveform switching indication field). For example, even if the first information indicates that dynamic waveform switching is supported, if the DCI (e.g., a DCI format 0_2 in which a DCI field is configurable) does not include the second information (e.g., a dynamic waveform switching indication field of 1 bit), whether to apply the transform precoding to the PUSCH can be determined based on an indication value of enabled or disabled for transform precoding by higher layer signaling (i.e., a waveform for uplink transmission can be determined).

Here, the uplink transmission may include a PUSCH/SRS/PUCCH/PRACH, etc. For example, in case of a PUSCH, the control information may correspond to DCI for scheduling the PUSCH, in case of an SRS, the control information may correspond to DCI for triggering transmission of the SRS (in case of aperiodic SRS transmission), and in case of a PUCCH, the control information may correspond to DCI for scheduling, for example, a PDSCH. In addition, the uplink transmission may correspond to MSG1 (i.e., PRACH or random access preamble transmitted on PRACH) and/or MSG3 (i.e., PDSCH scheduled by random access response UL grant) in case of a 4-step random access procedure (see FIG. 7), and may correspond to MSGA (i.e., PRACH and PUSCH carrying random access preamble) in case of a 2-step random access procedure (see FIG. 8).

FIG. 11 is a diagram illustrating an operation of a base station for an uplink transmission and reception method according to an embodiment of the present disclosure.

FIG. 11 illustrates an operation of a base station based on the proposed methods. The example of FIG. 11 is provided for convenience of explanation and does not limit the scope of the present disclosure. Some step(s) illustrated in FIG. 11 may be omitted depending on circumstances and/or settings. In addition, the base station in FIG. 11 is only an example and may be implemented as a device illustrated in FIG. 12 below. For example, the processor (102/202) of FIG. 12 may control the transceiver (106/206) to transmit and receive channels/signals/data/information, etc., and may also control the processor (102/202) of FIG. 12 to store transmitted or received channels/signals/data/information, etc. in the memory (104/204).

In addition, the operation of FIG. 11 may be processed by one or more processors (102, 202) of FIG. 12, and the operation of FIG. 11 may be stored in a memory (e.g., one or more memories (104, 204) of FIG. 12) in the form of a command/program (e.g., an instruction, an executable code) for driving at least one processor (e.g., 102, 202) of FIG. 12.

Meanwhile, although not shown in FIG. 11, a base station may receive UE capability information indicating that a UE has an ability to support dynamic waveform switching from the UE.

Referring to FIG. 11, a base station transmits configuration information related to uplink transmission to a UE (S1101).

Here, the configuration information related to uplink transmission may include information (hereinafter, first information) on whether dynamic waveform switching for uplink transmission is supported/allowed. In other words, the first information may be information indicating/configuring whether dynamic waveform switching for uplink transmission is enabled or disabled. Alternatively, the first information may be information indicating/configuring whether the application of transform precoding for uplink transmission is dynamically changed/configured.

Here, according to the embodiments described above, the first information (or the configuration information including the first information) may be individually provided for each BWP (or each cell).

Here, the uplink transmission may include a PUSCH, a PUCCH, a PRACH, an SRS, etc. Accordingly, the configuration information related to the uplink transmission may correspond to RACH common configuration (RACH-ConfigCommon), Msg. A PUSCH configuration (MsgA-PUSCH-Config), PUSCH configuration (PUSCH-Config), PUCCH configuration (PUCCH-Config), etc.

For example, according to the above-described embodiment 1, a new parameter is defined/introduced that indicates/configures whether dynamic waveform switching is supported/allowed, and the first information can be provided via the new parameter.

Alternatively, an additional state that can be indicated/configured in a parameter that indicates a waveform for an existing uplink transmission (i.e., indicates that transform precoding is enabled or disabled) is defined/introduced, and the first information can be provided (i.e., indicated/configured) through the additional state.

In addition, according to the above-described embodiment 2, dynamic waveform switching can be supported/allowed before (including after) a UE enters the RRC connected state. In this case, the first information can be transmitted through RACH configuration (e.g., RACH-ConfigCommon, RACH-ConfigDedicated, etc.).

In addition, according to the above-described embodiment 3 described above, dynamic waveform switching may be supported/allowed only after a UE enters the RRC connected state. In this case, the first information may be transmitted via RRC establishment (e.g., an RRC setup message, etc.). In addition, the first information may be transmitted via a PUSCH configuration (PUSCH-Config), a PUCCH configuration (PUCCH-Config), etc.

A base station can transmit control information (i.e., downlink control information) to a UE for scheduling/triggering uplink transmission (i.e., uplink signal/channel, e.g., PRACH, PUSCH, PUCCH, SRS, etc.) (S1102).

Here, according to the embodiments described above, the control information may include information (hereinafter, second information) for indicating whether transform precoding for the PUSCH is enabled or disabled, as indicated by the first information that dynamic waveform switching is supported (e.g., dynamic waveform switching is enabled).

Here, the second information may be information for indicating/configuring whether the waveform for uplink transmission is CP-OFDM or DFT-S-OFDM. In other words, the second information may be information for indicating/configuring whether transform precoding for uplink transmission is enabled or disabled (i.e., whether transform precoding is applied or not applied).

In addition, according to the embodiments described above, the control information may be MAC CE (e.g., RAR), in which case it may be transmitted via a PDSCH. Or, the control information may be DCI, in which case it may be transmitted via PDCCH. In addition, if control information is not required for transmission of an uplink signal/channel (e.g., in the case of transmission of the first message for the random access procedure), this step may be omitted.

For example, according to the above-described embodiment 2, the control information may be provided to a UE within a random access procedure (e.g., via a DCI scheduling a PDSCH carrying an RAR grant, a DCI scheduling retransmission of a Msg. 3 PUSCH and/or a Msg. A PUSCH, etc.).

In addition, according to the above-described embodiment 3, the control information may be provided to a UE (e.g., via a DCI scheduling a PUSCH, etc.) after the UE enters an RRC connected state/mode.

In addition, for example, a 1-bit field (e.g., a dynamic waveform switching indication field) for indicating whether the transform precoding is enabled or disabled may be included in the control information. That is, the second information may be provided to a UE through the 1-bit field (e.g., a dynamic waveform switching indication field).

In addition, according to the embodiments described above, when the control information is DCI, the second information (e.g., a 1-bit dynamic waveform switching indication field) may be individually configurable for each DCI format (e.g., DCI format 0_1 or 0_2). In other words, the 1-bit field (e.g., a 1-bit dynamic waveform switching indication field) for indicating whether the transform precoding is enabled or disabled may be individually configurable for each DCI format.

In addition, according to the above-described embodiment 3, the second information (e.g., a 1-bit dynamic waveform switching indication field) can configure/indicate a waveform for uplink transmission as one of CP-OFDM and DFT-S-OFDM. In other words, the second information (e.g., a 1-bit dynamic waveform switching indication field) can indicate whether transform precoding is enabled or disabled for uplink transmission.

In addition, the second information (e.g., a 1-bit dynamic waveform switching indication field) may indicate whether transform precoding is enabled or disabled for uplink transmission by indicating whether to be the same as an indication value of enabled or disabled for transform precoding by higher layer signaling (e.g., higher layer parameter "transformPrecoder", "msg3-transformPrecoder" or "msgA-TransformPrecoder").

Additionally, the second information (e.g., a 1-bit dynamic waveform switching indication field) may indicate whether transform precoding is enabled or disabled for uplink transmission by indicating whether to be the same as whether the transform precoding for the most recent PUSCH is the same as applied.

A base station receives an uplink transmission (i.e., an uplink signal/channel, e.g., PRACH, PUSCH, PUCCH, SRS, etc.) from a UE (S1103).

Here, based on the control information (e.g., DCI, MAC CE) including the second information (e.g., a 1-bit dynamic waveform switching indication field), whether to apply transform precoding for uplink transmission can be determined according to the second information (i.e., a waveform for uplink transmission can be determined).

Here, even if the enabled or disabled of transform precoding is indicated/configured by higher layer signaling (e.g., higher layer parameter "transformPrecoder", "msg3-transformPrecoder" or "msgA-TransformPrecoder"), if the control information (e.g., DCI, MAC CE) includes the second information (e.g., a 1-bit dynamic waveform switching indication field), the enabled or disabled indication value for transform precoding by higher layer signaling can be ignored. That is, a UE can prioritize the second information (e.g., a 1-bit dynamic waveform switching indication field) in the control information (e.g., DCI, MAC CE) over the higher layer signaling.

In addition, whether to apply the transform precoding to the PUSCH can be determined (i.e., a waveform for uplink transmission can be determined) based on higher layer signaling (e.g., higher layer parameter "transformPrecoder", "msg3-transformPrecoder" or "msgA-TransformPrecoder") based on the control information (e.g., DCI, MAC CE) not including the second information (e.g., a 1-bit dynamic waveform switching indication field). For example, even if the first information indicates that dynamic waveform switching is supported, if the DCI (e.g., a DCI format 0_2 in which a DCI field is configurable) does not include the second information (e.g., a dynamic waveform switching indication field of 1 bit), whether to apply the transform precoding to the PUSCH can be determined based on an indication value of enabled or disabled for transform precoding by higher layer signaling (i.e., a waveform for uplink transmission can be determined).

Here, the uplink transmission may include a PUSCH/SRS/PUCCH/PRACH, etc. For example, in case of a PUSCH, the control information may correspond to DCI for scheduling the PUSCH, in case of an SRS, the control information may correspond to DCI for triggering transmission of the SRS (in case of aperiodic SRS transmission), and in case of a PUCCH, the control information may correspond to DCI for scheduling, for example, a PDSCH. In addition, the uplink transmission may correspond to MSG1 (i.e., PRACH or random access preamble transmitted on PRACH) and/or MSG3 (i.e., PDSCH scheduled by random access response UL grant) in case of a 4-step random access procedure (see FIG. 7), and may correspond to MSGA (i.e., PRACH and PUSCH carrying random access preamble) in case of a 2-step random access procedure (see FIG. 8).

General Device to which the Present Disclosure may be applied

FIG. 12 is a diagram which illustrates a block diagram of a wireless communication device according to an embodiment of the present disclosure.

In reference to FIG. 12, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving, from a base station, configuration information related to a physical uplink shared channel (PUSCH) for a specific bandwidth part (BWP), wherein the configuration information includes first information on whether dynamic waveform switching is supported for the PUSCH;
   receiving, from the base station, downlink control information (DCI) for scheduling the PUSCH; and
   transmitting the PUSCH to the base station,
   wherein, based on the DCI including second information for indicating whether transform precoding for the PUSCH is enabled or disabled as the dynamic waveform switching is supported, whether to apply the transform precoding to the PUSCH is determined based on the second information.

2. The method of claim 1, wherein a 1-bit field for indicating whether the transform precoding is enabled or disabled is individually configured for each DCI format.

3. The method of claim 2, wherein even if the dynamic waveform switching is supported, whether the transform precoding is applied to the PUSCH is determined according to an indication value of enabled or disabled for transform precoding by higher layer signaling based on the DCI not including the second information.

4. The method of claim 2, wherein based on the DCI including the second information, an indication value of enabled or disabled for transform precoding by higher layer signaling is ignored.

5. The method of claim 1, wherein the second information indicates whether the transform precoding for the PUSCH is enabled or disabled by indicating whether to be the same as an indication value of enabled or disabled for transform precoding by higher layer signaling.

6. The method of claim 1, wherein the second information indicates whether the transform precoding for the PUSCH is enabled or disabled by indicating whether to be the same as whether transform precoding for the most recent PUSCH is applied.

7. The method of claim 1, further comprising:
   transmitting, to the base station, UE capability information supporting the dynamic waveform switching.

8. A user equipment (UE) operating in a wireless communication system, the UE comprising:

at least one transceiver for transmitting and receiving a wireless signal; and
at least one processor for controlling the at least one transceiver,
wherein the at least one processor configured to:

receive, from a base station, configuration information related to a physical uplink shared channel (PUSCH) for a specific bandwidth part (BWP), wherein the configuration information includes first information on whether dynamic waveform switching is supported for the PUSCH;
receive, from the base station, downlink control information (DCI) for scheduling the PUSCH; and
transmit the PUSCH to the base station,
wherein, based on the DCI including second information for indicating whether transform precoding for the PUSCH is enabled or disabled as the dynamic waveform switching is supported, whether to apply the transform precoding to the PUSCH is determined based on the second information.

9. At least one non-transitory computer-readable medium storing at least one instruction, wherein the at least one instruction executable by at least one processor controls a user equipment (UE) to:

receive, from a base station, configuration information related to a physical uplink shared channel (PUSCH) for a specific bandwidth part (BWP), wherein the configuration information includes first information on whether dynamic waveform switching is supported for the PUSCH;
receive, from the base station, downlink control information (DCI) for scheduling the PUSCH; and
transmit the PUSCH to the base station,
wherein, based on the DCI including second information for indicating whether transform precoding for the PUSCH is enabled or disabled as the dynamic waveform switching is supported, whether to apply the transform precoding to the PUSCH is determined based on the second information.

10. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

receiving, from a base station, configuration information related to a physical uplink shared channel (PUSCH) for a specific bandwidth part (BWP), wherein the configuration information includes first information on whether dynamic waveform switching is supported for the PUSCH;
receiving, from the base station, downlink control information (DCI) for scheduling the PUSCH; and
transmitting the PUSCH to the base station,
wherein, based on the DCI including second information for indicating whether transform precoding for the PUSCH is enabled or disabled as the dynamic waveform switching is supported, whether to apply the transform precoding to the PUSCH is determined based on the second information.

11. A method performed by a base station in a wireless communication system, the method comprising:

transmitting, to a user equipment (UE), configuration information related to a physical uplink shared channel (PUSCH) for a specific bandwidth part (BWP), wherein the configuration information includes first information on whether dynamic waveform switching is supported for the PUSCH;
transmitting, to the UE, downlink control information (DCI) for scheduling the PUSCH; and
receiving the PUSCH from the UE,
wherein, based on the DCI including second information for indicating whether transform precoding for the PUSCH is enabled or disabled as the dynamic waveform switching is supported, whether to apply the transform precoding to the PUSCH is determined based on the second information.

12. A base station operating in a wireless communication system, the base station comprising:

at least one transceiver for transmitting and receiving a wireless signal; and
at least one processor for controlling the at least one transceiver,

wherein the at least one processor configured to:

transmit, to a user equipment (UE), configuration information related to a physical uplink shared channel (PUSCH) for a specific bandwidth part (BWP), wherein the configuration information includes first information on whether dynamic waveform switching is supported for the PUSCH,
transmit, to the UE, downlink control information (DCI) for scheduling the PUSCH; and
receive the PUSCH from the UE,
wherein, based on the DCI including second information for indicating whether transform precoding for the PUSCH is enabled or disabled as the dynamic waveform switching is supported, whether to apply the transform precoding to the PUSCH is determined based on the second information.

FIG.1

FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

FIG.4

FIG.5

# FIG.6

| INITIAL CELL SEARCH | SYSTEM INFORMATION RECEPTION | RANDOM ACCESS PROCEDURE | | | | GENERAL DL/UL Tx/Rx | |
|---|---|---|---|---|---|---|---|
| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |
| S601 | S602 | S603 | S604 | S605 | S606 | S607 | S608 |

· DL/UL ACK/NACK
· UE CQI/PMI RI REPORT
  USING PUSCH AND PUCCH

EP 4 564 722 A1

## FIG.7

UE        BS

① Random access preamble →

← Random access response ②

③ Scheduled transmission →

← Contention resolution ④

(a)

UE        BS

⓪ ← Random access preamble allocation

Random access preamble → ①

② ← Random access response

(b)

FIG.8

(a)

(b)

## FIG.9

UE                                                    Base station

Configuration information related to
uplink transmission ————— S901

Control information ————— S902

Uplink signal/channel ————— S903

## FIG.10

Receive configuration information
related to uplink transmission ——— S1001

Receive control information ——— S1002

Transmit uplink signal/channel ——— S1003

## FIG.11

Transmit configuration information
related to uplink transmission ——— S1101

Transmit control information ——— S1102

Receive uplink signal/channel ——— S1103

EP 4 564 722 A1

FIG.12

## INTERNATIONAL SEARCH REPORT

| | International application No. |
| --- | --- |
| | **PCT/KR2023/009972** |

| A. | CLASSIFICATION OF SUBJECT MATTER |
| --- | --- |

**H04L 5/00**(2006.01)i; **H04W 74/00**(2009.01)i; **H04W 72/23**(2023.01)i; **H04L 27/26**(2006.01)i; **H04W 74/08**(2009.01)i; **H04W 76/27**(2018.01)i; **H04L 1/08**(2006.01)i

According to International Patent Classification (IPC) or to both national classification and IPC

| B. | FIELDS SEARCHED |
| --- | --- |

Minimum documentation searched (classification system followed by classification symbols)

H04L 5/00(2006.01); H04L 27/26(2006.01); H04L 27/36(2006.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH, 설정 정보(configuration information), 동적 파형 스위칭(dynamic waveform switching), DCI, 변환 프리코딩(transform precoding)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| DY<br>DA | 3GPP; TSG RAN; NR; Physical layer procedures for data (Release 17). 3GPP TS 38.214 V17.2.0. 23 June 2022.<br>See page 161. | 1-2,5,7-12<br>3-4,6 |
| Y | CN 113572587 A (HANGZHOU HONGLINGTONG INFORMATION TECHNOLOGY CO., LTD.) 29 October 2021 (2021-10-29)<br>See abstract; and claim 1. | 1-2,5,7-12 |
| Y | US 2021-0400656 A1 (QUALCOMM INCORPORATED) 23 December 2021 (2021-12-23)<br>See claim 9. | 7 |
| A | KR 10-2022-0081362 A (LG ELECTRONICS INC.) 15 June 2022 (2022-06-15)<br>See claims 1-6. | 1-12 |
| A | WO 2022-080983 A1 (LG ELECTRONICS INC.) 21 April 2022 (2022-04-21)<br>See paragraphs [0218]-[0231]; and figures 21-22. | 1-12 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **24 October 2023** | **24 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/009972**

| Patent document cited in search report | | | Publication date (day/month/year) | Patent family member(s) | | | Publication date (day/month/year) |
|---|---|---|---|---|---|---|---|
| CN | 113572587 | A | 29 October 2021 | None | | | |
| US | 2021-0400656 | A1 | 23 December 2021 | None | | | |
| KR | 10-2022-0081362 | A | 15 June 2022 | CN | 114731207 | A | 08 July 2022 |
| | | | | EP | 4027741 | A1 | 13 July 2022 |
| | | | | EP | 4027741 | B1 | 06 September 2023 |
| | | | | JP | 2022-552647 | A | 19 December 2022 |
| | | | | US | 11729837 | B2 | 15 August 2023 |
| | | | | US | 2022-0240327 | A1 | 28 July 2022 |
| | | | | WO | 2021-066606 | A1 | 08 April 2021 |
| WO | 2022-080983 | A1 | 21 April 2022 | EP | 4231601 | A1 | 23 August 2023 |
| | | | | KR | 10-2023-0025857 | A | 23 February 2023 |

Form PCT/ISA/210 (patent family annex) (July 2022)